# EUROPEAN PATENT SPECIFICATION

(11) **EP 1 674 549 B1**
(45) Date of publication and mention of the grant of the patent: **20.02.2008**
(21) Application number: 05111739.8
(22) Date of filing: 06.12.2005
(51) Int. Cl.: C09K 11/85

(54) **Method for preparing storage phosphors**
Methode zur Herstellung von Speicherleuchtstoffen
Procédé de preparation des matériaux phosphorescents

(30) Priority: 23.12.2004 EP 04106925
(43) Date of publication of application: 28.06.2006
(73) Proprietor: Agfa HealthCare NV, 2640 Mortsel (BE)
(72) Inventor: Tahon, Jean-Pierre, Septestraat 27 B-2640, Mortsel (BE); Leblans, Paul, Septestraat 27 B-2640, Mortsel (BE); Struye, Luc, Septestraat 27 B-2640, Mortsel (BE); Lamotte, Johan, Septestraat 27, B-2640, Mortsel (BE)
(74) Representative: Theunis, Patrick

(56) References cited:
- EP-A- 0 102 459
- EP-A- 1 217 633
- US-A1- 2003 104 121
- PATENT ABSTRACTS OF JAPAN vol. 2003, no. 02, 5 February 2003 (2003-02-05) & JP 2002 294229 A (KONICA CORP), 9 October 2002 (2002-10-09)
- LAKSHMANAN^A^ ^B A R ET AL: "Luminescence studies in BaFBr and BaFBr:Eu" RADIATION MEASUREMENTS, ELSEVIER, AMSTERDAM, NL, vol. 33, no. 1, February 2001 (2001-02), pages 119-127, XP004226281 ISSN: 1350-4487
- M. THOMS, H. VON SEGGERN: "Method for the determination of photostimulable defect center concentrations, production rates, and effective formation energies" J.APPL.PHYS., vol. 75, no. 9, 1994, pages 4658-4661, XP002368913

## Description

### FIELD OF THE INVENTION

The present invention relates to a method for preparing storage or stimulable phosphor sheets, screens or panels. More specifically the present invention is related to a method of preparing storage phosphor panels showing improved speed, without impairing sharpness.

### BACKGROUND OF THE INVENTION

It is well known to use photoluminescent storage phosphor screens for various purposes, including computed radiography. Such phosphor screens may be created by applying a phosphor layer onto a substrate which may be formed of quite a lot of suitable materials, including metals, glass, polymers (like polyester, polycarbonate, carbon reinforced resin materials), ceramic composites and miscellaneous materials as a-C (amorphous carbon), without however being limited thereto. The phosphor screens include coated or deposited materials capable of trapping electrons and holes when exposed to ionizing radiation energy. Between support and phosphor layer, a subbing or intermediate substrate may be present. Such a substrate may function as a layer improving adhesion of the phosphor layer onto the substrate, or as a layer, improving protection against e.g. dirt or moisture, improving reflection of stimulated light in favour of sensitivity or improving absorption of stimulation light in favour of sharpness.

Such phosphor screens, when exposed to radiation quanta, are capable of storing an image, or a spatially varying energy pattern, by trapped electrons. The screens undergo a reversible change of the electronic state of the screen when they are exposed to the radiation quanta. The state is reversed by mildly exposing the screen to infrared or red photons, which is accompanied by emission of more photons within the wavelength range of the visible spectrum. So the phosphor screen provides ability to absorb a radiation pattern, to store the information as trapped electrons, and is later read optically by converting the electronically stored radiation pattern to a pattern visible for a light detector.

Most phosphor screens include a phosphor composition which uses as a base material barium fluorohalide type storage phosphors, such as e.g. BaFBr:Eu or the more recently selected cesium halide type phosphor such as the preferred CsBr:Eu phosphor, providing ability to be coated by vapour deposition techniques in binderless needle-layer form as has been taught e.g. in WO 01/03156.

When doped with rare earth ions, generation of new energy levels within the crystalline lattice appears. Ions consisting of a nucleus of protons and neutrons are surrounded by outer electrons that can only occupy certain discrete energy levels which can each accommodate a fixed number of electrons. Electrons can undergo transition between levels if the levels are only partially filled. Transition of an electron from a lower energy level to a higher energy level requires an absorption of energy by the electron, while transition of an electron from a higher energy level to a lower energy level gives rise to an emission of energy by the electron. In the particular case where an electron is stored in a higher energy level, without spontaneously or promptly falling back to a lower energy level, stimulation by an energy source is required in order to provoke stimulated emission of stimulated radiation by e.g. light exposure, heat or other appropriate energy sources. With respect to the rare earth ions, the 4f level is only partially filled, but is surrounded by electrons in higher energy levels. As such, the electrons may undergo transition: e.g. 4f electrons may move to the higher 5d level. Energy difference between 4f and 5d levels corresponds to visible light energy such that 4f electrons may be excited to the 5d level by absorption of visible light. Subsequently, 5d electrons can fall back to the 4f level, accompanied by the emission of light.

When rare earth ions are introduced within the crystalline lattice, energy level configurations change, due to interaction between the electron energy levels of the ions with the electron energy levels of the phosphor crystal. Electrons of the rare earth ion energy levels may further interact with each other. A well known example of such interactions occurs when the crystal is exposed to ionising radiation, as electrons from the valence band are excited to the conduction band. Removal of the electron thereby leaves behind a net positive charge or "hole" and "electron and hole" are referred to as an "electron-hole pair". Electron-hole pairs are mobile within the crystal lattice and, due to potential barriers, the pair generally remains bound as it travels through the lattice, wherein such a bound pair is known as an "exciton".

In phosphors wherein excitons are long-lived, they may migrate through the lattice for some time before recombining and neutralizing each other. Such excitons preferentially recombine at distortions such as a foreign ion. Energy generated from the recombined pair becomes transferred to the "lattice foreign ion" or activator which results in excitation of the ground level 4f electron to a 5d level of said ion, in the case the foreign ion is a lanthanide ion. Once in the 5d level, it will fall back to the 4f level and give rise to emission of a photon. In storage phosphors the electrons and holes of the created excitons may be separated and be stored separately in electron traps and hole traps respectively By creating a population of trapped electrons and holes in the phosphor screen, a latent image is created. Such a trapping process is reversed by stimulating electrons trapped at trapping sites with external energy as e.g. energy to move a trapped electron to an excited state which is 1-2 eV higher in energy than the ground state of the trapping centre. Optical stimulation, thus, is equivalent to exposure to 600 to 1,200 nm wavelength photons. Optical stimulation wavelength ranges for such a transition thus show a peak efficiency at 1-2 eV, being an energy in the red to near-infrared (NIR) region.

Once in the excited state, the electron can tunnel or migrate to a trapped hole, recombine with the hole and transfer the excess energy to the activator ion in the vicinity. The activator ion will be excited and will emit a photon upon de-excitation. The luminescence thus created is referred to as "photostimulated luminescence" or "PSL". So the intensity of the PSL is directly proportional to the number of trapped electrons which is proportional to the amount of radiation energy absorbed by the phosphor screen.

If the excitons do not get split up, or in the absence of trapping centres, excitons are likely to recombine on an activator ion, thereby generating visible light photons. This process is known as prompt emission luminescence. Trapping centres can be induced by the use of co-dopants. Co-dopants are lattice foreign ions which can be introduced into the lattice by different procedures : during the evaporation process or during annealing. These co-dopants don't emit light after stimulation with red or IR light.

The efficiency of electron trapping thus depends upon the efficiency of the various trap creation process steps, including exciton generation, exciton split-up, and electron and hole trapping. The efficiency of exciton generation, and therefore, the number of created excitons, depends on the specific X-ray absorption of the storage phosphor. The specific X-ray absorption depends on the chemical composition and cannot, therefore, be improved for a certain storage phosphor type. Consequently, increasing the electron trapping efficiency of a storage phosphor can be accomplished by making exciton split-up more efficient and/or by making electron and hole trapping more efficient.

After phosphor screen energy absorption, the latent image, must be converted to a digital image. The phosphor screen is scanned therefore with a laser beam so that only a small volume of the phosphor layer is photostimulated at any given time. Remaining areas are left undisturbed. A scanning mirror is digitally controlled to the precise laser beam position on the screen so that the PSL intensity from the small phosphor area can be measured with a light sensor, e.g. a photomultiplier tube which converts the light into an electrical current, converted to voltage and digitized. The digital voltage value is stored in a computer memory as a function of the x-y position coordinates on the phosphor screen as the process of reading each small portion is repeated across the entire phosphor screen.

It is clear that there is an ever lasting need in the art for improved storage phosphors which can store a large amount of radiation energy and which give rise to highly efficient PSL upon read-out of the storage phosphor plate.

### OBJECTS AND SUMMARY OF THE INVENTION

It is a first object of the present invention to offer a method for preparing a photostimulable or storage phosphor having improved speed and improved response to stimulation light.

Further objects will become apparent from the description hereinafter.

The above-mentioned advantageous effects have been realized by providing a method for preparing a high-speed, high-resolution storage or stimulable phosphor comprising a host or matrix compound and an activator or activator compound or element, wherein, in said matrix compound, a precipitate or inclusion having a size in the range from 10⁻³ up to 10 µm, is present and wherein an annealing step is present having the characteristics as set out in claim 1 and in the claims dependent thereupon.

This preparation method of the present invention, more in particular, provides a significant improvement in sensitivity by achieving a more efficient exciton split-up and, therefore a more efficient electron and hole trapping and, as a consequence thereof, a more efficient energy storage. Therefore, in a preferred embodiment according to the method of the present invention, the precipitates are ferro-electric, because the electric field of the ferro-electric precipitates creates very favourable conditions for separation of the electron and the hole of an exciton.

Further advantages and embodiments of the present invention will become apparent from the following description and drawings.

### BRIEF DESCRIPTION OF THE DRAWINGS

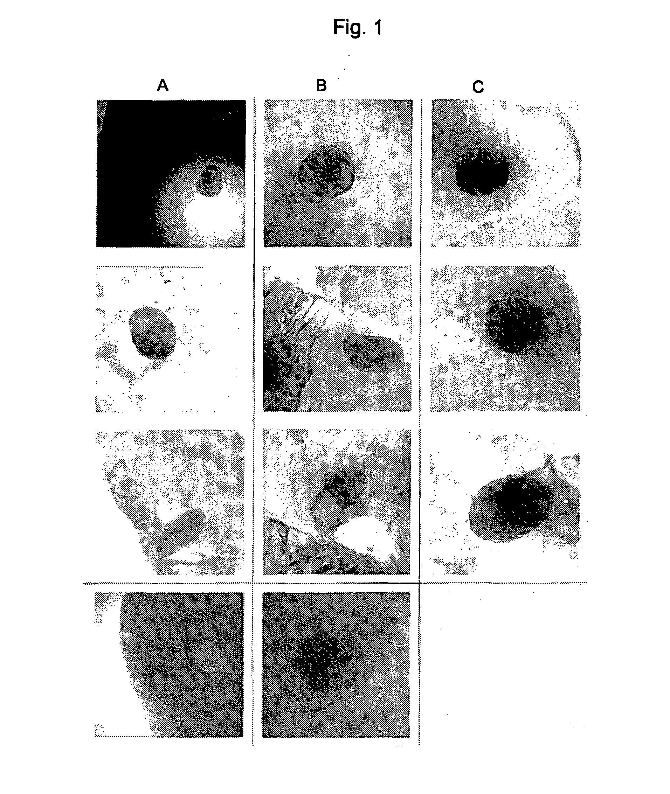

Fig.1 shows TEM-images of the precipitates, without additional temperature treatment (column A) ; annealed at 180°C during 4 hours in air (column B) and annealed during 4 hours at 400°C in air (column C) - 1, 2 and 3: samples prepared by ultramicrotomy; 4 (where present): samples prepared by polishing and ion-miling.

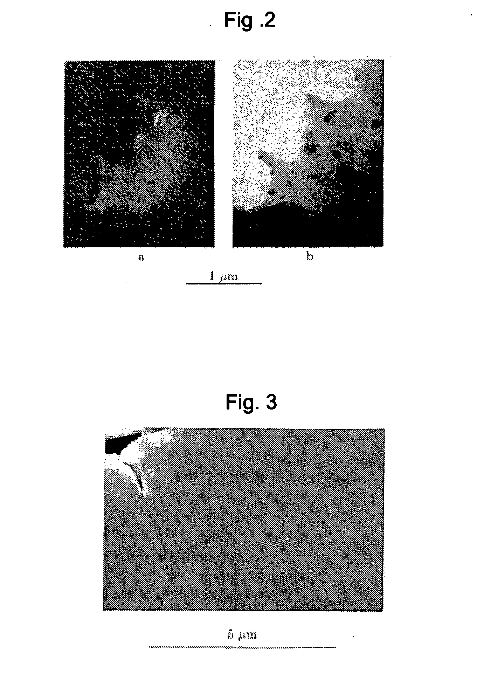

Fig.2 shows the accumulation of precipitates, seen in an imaging plate which was not temperature treated. In the left photograph, holes - presumably disruptions of precipitates - are shown in an ultramicrotomy cut; whereas in the right photograph precipitates - white in SEM contrast - are shown on a polished sample.
Fig. 3 shows the homogeneous distribution of precipitates, white in a scanning electron microscope (SEM) contrast, after tough temperature treatment, not suitable for application upon X-ray storage phosphors (annealed at 405°C in air), with average distances between precipitates of about 2 µm.

### DETAILED DESCRIPTION

According to the present invention a method is offered for preparing a stimulable phosphor layer comprising a phosphor composed of a host or matrix compound and a dopant or activator compound or element wherein a precipitate or inclusion having a size in the range from 10⁻³ µm up to 10 µm is present in said matrix compound after performing following steps:
- providing one or more crucibles containing precursor compounds for said host, said dopant and said precipitate, by increasing the temperature of said crucible(s) up to a temperature provoking evaporation of all of said precursor compounds as a vaporized latent phosphor cloud,
- depositing said vaporized latent phosphor cloud in form of a layer onto a temperature controlled substrate,
- followed by cooling said substrate, further
- annealing said phosphor layer at a temperature in the range from 35°C up to 200°C, wherein said method is characterised by performing said annealing in an atmosphere having a water content of more than 10 g per m³ of dry air at the temperature at which annealing proceeds.

In a further embodiment the temperature of the said substrate as presented in the annealing atmosphere when starting annealing, is lower than the dew point of water in said atmosphere.

"Annealing" is known as a procedure wherein an additional energy treatment is given after the end of the vapour deposition. Most performed as an additional energy treatment is a heat treatment, which is performed after vapour deposition. In "normal" annealing procedures, as in US-A 6,730,243 an annealing procedure may be applied wherein after cooling the plate is brought to a temperature between 80 and 220°C and maintained at that temperature for a time between 10 minutes and 15 hours. In another embodiment as in US-A 2003/186023 a procedure may be applied wherein heating the crystal layer proceeds at a temperature of lower than 300°C but not lower than 50°C for a period of 1 to 8 hours in an inert gas atmosphere or an inert gas atmosphere containing a small amount of oxygen or hydrogen. Furtheron as in US-A 2003/0218139 annealing may be performed at a temperature of 50 to 600°C for at least one hour. As in US-A 2005/0040340 an annealing step may be performed at a temperature of from 80°C to 300°C, and more preferably from 100°C to 200°C. Moreover as described in US-A 2005/0133731 after the deposition procedure is complete, the deposited layer may be subjected to heat treatment (annealing), which is carried out generally at a temperature of 100 to 300°C for 0.5 to 3 hours, preferably at a temperature of 150 to 250°C for 0.5 to 2 hours, under inert gas atmosphere which may contain a small amount of oxygen gas or hydrogen gas. Alternatively in EP-A 1 443 525 and in US2005/0077477 a radiation exposure treatment is given with energy from radiation sources emitting short ultraviolet radiation in the range from 150 nm to 300 nm with an energy of at least 10 mJ/mm². Most performed as an additional energy treatment is a heat treatment, performed after vapour deposition. So as an annealing step a heat treatment is performed after vapour deposition, e.g., at 170°C during 4 hours.

Furtheron in this text the step of maintaining the deposited phosphor layer for a given time at a given temperature will thus be called "annealing step", although it is not sure that strictu sensu an "annealing of the crystal structure" takes place indeed after the step of cooling the substrate to room temperature and before the step of bringing said cooled substrate to a temperature as indicated hereinafter.

It has been found that, to some extent, time and temperature while performing the "annealing step" are interchangeable, but that a crucial factor is the absolute amount of moisture present in the annealing atmosphere at that temperature at the relative humidity present therein. So while performing the "annealing step" it is, according to the method of the present invention, of utmost importance to have an absolute moisture content, expressed as weight of water in vaporized form and expressed in grams per m³ of dry air, of more than 10, more particularly at a preferred temperature of more than 80°C (e.g. 90°C) in said atmosphere. According to the method of the present invention annealing of said phosphor layer proceeds by increasing the temperature of said substrate in the range from 80°C to 180°C, and more preferably in the range from 90°C to 170°C.

Another crucial feature in order to get an optimized result when applying the method of the present invention is the requirement to have a substrate support at a temperature, lower than the dew point of the atmosphere. A commonly applied atmosphere for the substrate is "room temperature", set at 20°C, as the cooling step of the said substrate in the method of preparing the phosphor plate is normally performed to said room temperature, although that temperature may differ therefrom as will be illustrated hereinafter. In favour of having a homogeneously distributed temperature over the surface of the whole substrate support however, it may be advantageous that the support provides a sufficient heat conductivity.

It is clear that annealing is undertaken at temperatures below the melting point of the phosphor, since melting clearly would destroy the crystallinity of the phosphor as a physical structure.

In order to illustrate the relation between relative humidity and moisture content in an room in which a phosphor panel is present and in the oven in which the phosphor panel should be annealed, wherein the oven is present in the same room, figures have been summarized in the Table 1 given hereinafter.

**Table 1**

| **Room temperature** | °C | 25 | 25 | 36 | 35 | 23 |
|---|---|---|---|---|---|---|
| **Relative humidity** | % | 10 | 50 | 65 | 70 | 60 |
| Absolute moisture content | g/kg | 1.9 | 9.8 | 24.4 | 24.9 | 10.5 |
| **Absolute moisture** | **g/m³** | 2.3 | **11.4** | **26.8** | **27.4** | **12.3** |
| Specific volume | m³/kg | 0.847 | 0.858 | 0.911 | 0.908 | 0.853 |
| Vapour pressure | Pa | 315 | 1574 | 3829 | 3904 | 1676 |
| **Oven temperature** | °C | 170 | 170 | 170 | 170 | 170 |
| **Relative humidity** | % | 0.04 | 0.19 | 0.97 | 0.98 | 0.21 |
| Absolute moisture content | g/kg | 1.9 | 9.8 | 24.4 | 24.9 | 10.5 |
| **Absolute moisture content** | **g/m³** | 1.58 | 7.69 | **18.7** | **19.1** | 8.2 |
| Specific volume | m³/kg | 1.259 | 1.274 | 1.303 | 1.304 | 1.276 |

Table 1 e.g. clearly shows conditions wherein an absolute moisture contents of more than 10 g/m³ at an oven temperature of 170°C is attained.

In the Table 2 hereinafter figures about the relationship between temperature, relative humidity and amount of water vapour per kg of dry air have been summarized.

**Table 2**

| Temperature °C | RH (%) | Amount of water vapour in dry air (in g/kg) | Amount of water vapour in dry air (in g/m³) |
|---|---|---|---|
| 90 | 46 | 286 | 190 |
| 90 | 59 | 419 | 243 |
| 90 | 80 | 756.5 | 331.7 |
| 130 | 60 | 1658 | 872 |
| 130 | 80 | - | 1162 |
| 170 | 0.12 | 6.0 | 4.7 |
| 170 | 1 | 54.1 | 39.6 |

A higher temperature thus allows a higher moisture content in form of water vapour at a constant relative humidity (see e.g. highest values at 130°C at 60 % versus at 80 % RH).

In the Table 3 hereinafter "dew points" Td (°C) have been summarized in the oven as a function of oven temperature T(°C) and relative humidity RH (in %) for a panel substrate temperature Ts of 20°C.

As illustrated therein for the higher annealing temperature of 90°C as desired, a relative humidity RH of more than 3% should be provided in order to get condensation of water vapour onto the phosphor layer of the phosphor panel when bringing in the oven the panel, preconditioned at 20°C in a room outside the said oven.

**Table 3**

| | | | | | | | | | | |
|---|---|---|---|---|---|---|---|---|---|---|
| % RH | 0.12 | 1.4 | 45 | 59 | 80 | < 3 | > 3 | 45 | 65 | 80 |
| T | 170 | 90 | 90 | 90 | 90 | 90 | 90 | 35 | 35 | 35 |
| Td | 5 | 6.1 | 70 | 76 | 84 | > 20 | < 20 | 21.2 | 27.4 | 31.0 |
| Ts | 20 | 20 | 20 | 20 | 20 | 20 | 20 | 20 | 20 | 20 |

At higher oven annealing temperatures of e.g. 170°C it is required to store the phosphor plate in a room having a Ts that is lower than the corresponding Td. Ts < Td means that in case of a low RH (0.12) as in Table 3, the support should be stored or preconditioned at a temperature of less than 5°C.

By performing the annealing step as set out hereinbefore, it is required to take into account presence in the annealing oven of absolute amounts of water vapour of more than 10 g per m³ of dry air. In a further embodiment it should be taken into account that the temperature of the substrate should not exceed the dew point in that atmosphere.

Therefore it is preferred to anneal at a temperature of at least 90°C, optimally at least 130-170°,C. The duration of annealing is largely a matter of choice. At least some effect may be realized, merely by heating to the preferred minimum annealing temperature, followed by spontaneous cooling (or, alterna-tively, sudden enforced cooling, followed by heating to the said preferred minimum annealing temperature again and further by a spontaneous cooling step). Since annealing occurs at temperatures below the melting point of the phosphor, no degradation of the phosphor composition is observed by holding the crystalline phosphor at its annealing temperature for extended periods. Generally overnight (16 hours at more than 35°C and 80% RH) or, alternatively, one day (24 hours) to one week annealing periods are convenient and effective in practical applications.

Annealing said phosphor layers by the method of the present invention advantageously proceeds at a temperature in the oven of more than 80°C, e.g. in the range from 90°C to 180°C, provided that absolute amounts of water vapour of more than 10 g per m³ of dry air are present in the said oven. Referring to Table 2 an amount of 243 g per m³ is present when the temperature of the oven is set at 90°C for 80% RH.

Annealing said phosphor layers by the method of the present invention can proceed in an atmosphere having a relatively low humidity of e.g. at least 3 %, provided that the temperature of the said substrate as presented when starting annealing equals room temperature (20°C) for an annealing temperature of 90°C as can be concluded from the Table 3, wherein it is required again that absolute amounts of water vapour of more than 10 g per m³ of dry air are present in the said oven.

It is clearly understood that the temperature of the substrate panel should be preconditioned at a temperature Ts lower than the dew point of water in the oven atmosphere in order to provoke condensation.

Annealing said phosphor layer e.g. advantageously proceeds in an atmosphere having a relative humidity of at least 0.1 %, provided that the temperature of the said substrate as presented when starting annealing equals room temperature (20°C) for an annealing temperature of 130°C.

After firing, the thus formed deposited stimulable phosphor layer is thus advantageously annealed at a temperature from 80°C to 180°C, and, more preferably from 90°C to 170°C, provided that absolute amounts of water vapour of more than 10 g per m³ of dry air are present in the said oven. Annealing at a lower temperature will require a higher relative humidity, e.g. of about 60 % or even more.

According to the method of the present invention annealing said phosphor layer thus proceeds at a temperature in the range from 80°C to 180°C and, more preferably in the range from 90°C to 170°C.

Phosphor screens advantageously annealed according to the method of the present invention include a phosphor composition which uses as a preferred base material the recently selected cesium halide type phosphor such as the preferred CsBr:Eu phosphor, providing ability to be coated by vapour deposition techniques in binderless needle-layer form and prepared as has been taught e.g. in WO 01/03156. In the method according to the present invention as disclosed herein, vapour depositing said phosphor onto a dedicate substrate advantageously proceeds by a method selected from the group consisting of physical vapour deposition, chemical vapor deposition or an atomisation technique. Applying said phosphor on a substrate by said methods thus includes thermal vapor deposition, electron beam evaporation, magnetron sputtering, radio frequency sputtering and pulsed laser deposition or atomisation techniques such as spray drying and thermal spraying, without being limited hereto. The method of depositing said vaporized latent phosphor cloud in form of a layer, according to the present invention, in one embodiment thereof proceeds in batch, whereas in another embodiment said method proceeds in a continuous process.

According to the method of the present invention, a precipitate or inclusion in the said phosphor has a size in the range from 10 nm to 1 µm, preferably at least 10 nm, more preferably at least 30 nm, and even more preferably at least 50 nm. In a further embodiment of the stimulable phosphor prepared according to the method of the present invention said inclusion in form of a particle, such as a precipitate, has an average particle size, expressed as average equivalent volume diameter, in the range from 50 nm to 1000 nm, more preferably in the range from 75 nm to 750 nm and even more preferably said average particle size is in the range from 100 nm to 300 nm. Standard deviations upon said average particle sizes, expressed as percentages thereof, are in the range from 10 to 40 %, more preferably from 10 to 30 % and most preferably from 10 to 20 %.

According to the method of the present invention at least said dopant or activator compound or element is present as an inclusion or precipitate in said matrix compound.

Further according to the method of the present invention said inclusion or precipitate is a ferroelectric compound.

In said storage phosphor prepared according to the method of the present invention, a total amount of activator compound ranges from 1 p.p.m. to 200,000 p.p.m..
Further in the phosphor of the phosphor layer prepared according to the method of the present invention, said inclusion or precipitate is a compound or a mixture of compounds according to general formula (1)

M¹M²X₃ (1) ,

wherein M¹ represents one of Li, Na, K, Rb and Cs as an alkali metal; wherein M² represents one of Mg, Ca, Sr and Ba as an earth alkaline metal; Eu or Sm as a lanthanide; Hg or Pb as a transition metal; wherein X stands for one of F, Cl, Br or I as a halide.

More preferably in said phosphor prepared according to the method of the present invention, said inclusion or precipitate is selected from the group consisting of CsBaBr₃, CsSrBr₃, CsCaBr₃, CsPbCl₃, CsSrCl₃, CsSmCl₃, CsHgCl₃, and CsₓEu_{y}Br_{x+αy} , wherein 2 ≤ α < 3.

In one embodiment said inclusion or precipitate is a compound or a mixture of compounds according to the general formula (2)

Ba₁₋ₓM¹ ₓTi_{1-y}M² _{y}O_{δ} (2)

wherein M¹ represents one of Li, Na, K, Rb and Cs as an alkali metal;
wherein M² represents one of Mg, Ca, Sr and Ba as an earth alkaline metal; Eu or Sm as a lanthanide; Hg or Pb as a transition metal; wherein X stands for one of F, Cl, Br or I as a halide and wherein 0≤x≤1, 0 ≤y < 1 and δ = (3-x/2-y).

Further according to the method of the present invention, said storage phosphor is composed of a matrix compound selected from the group consisting of an alkali metal halide or combination of halides, an alkaline earth metal halide or combination of halides, an earth metal halide or combination of halides and a combination of at least two of said alkali metal, alkaline earth metal and earth metal halides or a combination of halides thereof.

In the method according to the present invention said storage phosphor has, as a dopant or activator compound or element, at least one lanthanide ion or at least one lanthanide compound.

Said storage phosphor is preferably represented by the general formula (3)

M^{I}X.aM^{II}X'₂.bM^{III}X"₃:zA (3)

in which M^{I} is at least one alkali metal element selected from the group consisting of Li, Na, K, Rb and Cs; M^{II} is at least one alkaline earth metal element or divalent metal element selected from the group consisting of Be, Mg, Ca, Sr, Ba, Ni, Cu, Zn and Cd; M^{III} is at least one rare earth element or trivalent metal element selected from the group consisting of Sc, Y, La, Ce, Pr, Nd, Pm, Sm, Eu, Gd, Tb, Dy, Ho, Er, Tm, Yb, Lu, Al, Ga and In; each of each of X, X' and X" independently is at least one halogen selected from the group consisting of F, Cl, Br and I; A is at least one rare earth element or metal element selected from the group consisting of Y, Ce, Pr, Nd, Sm, Eu, Gd, Tb, Dy, Ho, Er, Tm, Yb, Lu, Mg, Cu, and Bi; and a, b and z are numbers satisfying the conditions of 0 ≤ a < 0.5, 0 ≤ b < 0.5 and 0 < z ≤ 1.0, respectively.

According to the method of the present invention, said stimulable phosphor advantageously is a europium activated cesium bromide phosphor.

According to the method of the present invention, in said stimulable phosphor Eu is present as a dopant or activator compound or element in an amount of at least 200 p.p.m..

Alternatively said stimulable phosphor is a europium activated barium fluorobromide phosphor.
Further according to the method of the present invention said phosphor panel substrate support is selected from the group consisting of metals, glass, polyester, polycarbonate, carbon reinforced resin plates or fibers, ceramic composites and amorphous carbon.

Ending the step of annealing of the crystalline phosphor can be performed by spontaneously cooling or quenching to room temperature. It is however more preferred, after annealing, according to the method of the present invention to a further perform a cooling step wherein said cooling step proceeds at a rate of less than 0.5°C per minute. So e.g. a temperature difference of 150°C is attained in a time of at least 300 minutes. The cooling gradient should not necessarily be linear.

Cooling may e.g. proceed by means of cooling ramps and is merely a matter of convenience. Opposite thereto heating may e.g. proceed by induction, by addition of a stream of heated gas, by infrared sources, by thermal ramps or by plasma in carrier gas, without however being limited thereto.

A suitable annealing time period is thus determined, not only by the time necessary to produce a desired result, but to a larger extent by the relative humidity, the corresponding moisture content at the annealing temperature and the dew point in the annealing atmosphere. Since annealing can be continued indefinitely without detrimental results, selection of a minimum time period is simply a trivial matter of working backwards by trial and error from an excess time period. For the specific phosphors disclosed herein, a time in the range from 1 hour to 10 hours of annealing is suitable, and more preferably in the range from 2 hours to 10 hours of annealing.

Apart from such effects, which can only be determined indirectly, more directly controllable "macroscopic" properties may be measured as e.g. light scattering effects and opacity, without however being limited thereto.

Precipitates or inclusions, apart from having a preferential orientation along the crystallographic planes of the phosphor crystals, have an average size and concentration in the phosphor crystals that has been observed to be influenced by annealing, in that the average size increases, whereas the concentration thereof decreases and interspaces inbetween said precipitates or inclusions increase.

It is clear that in the method of the present invention wherein a phosphor layer is prepared by deposition onto a suitable substrate and annealed in a further process step, that all of the process steps moreover proceed without damaging the substrate. So the annealing temperature is held well below the stress relief point of the phosphor substrate, and the melting point of the substrate is not exceeded during the annealing process.

Commonly used, well-known substrates are metals (like e.g. aluminum), glass, polymers (like polyester, polycarbonate, carbon reinforced resin materials, as e.g. carbon reinforced fibres), ceramic composites and miscellaneous materials as a-C (amorphous carbon), without however being limited thereto. The substrates may be structured before deposition of the phosphor in order to get a better defined structured phosphor layer after deposition or in order to provide a functional property, as e.g. when a fibre optic plate is used as a substrate. In case of needle-shaped, cylindrical phosphors however, those phosphors are already aligned in parallel and, depending on the relative positions and relative movements of vapour streams and substrates, those phosphors are aligned perpendicularly to the substrate or under a well-defined angle. When an annealing step is applied, depending on the temperature as envisaged, the substrate may partially be provided with a heat shield, at least at the edges and corners thereof. Apart from those measures annealing times and temperatures may be performed by application of particularly chosen temperature (heating and/or cooling) gradients and dwell times.

### Examples

While the present invention will hereinafter be described in connection with preferred embodiments thereof, it will be understood that it is not intended to limit the invention to those embodiments.

### Example 1

Experimental evidence for the existence of inclusions in particle form, such as precipitates or inclusions, in CsBr:Eu imaging plates, obtained by vapour deposition onto a suitable substrate, has been found by TEM-analysis of samples of a storage phosphor plate, prepared in two different ways.

In a first experiment TEM foils were cut by ultramicrotomy (dry cutting wherein foil thicknesses in the range from 50 nm to 80 nm were obtained), whereas in a second preparation a polishing technique was applied and an Argon-ion-milling technique (milling performed at liquid nitrogen temperature).

Results thereof have been shown in Fig. 1 for phosphor plates
- without an annealing step (no additional heat treatment - see photographs in the left column);
- with an annealing step (at 180°C, during a time of 4 hours, in air)
- with an extended annealing step (at 400°C, during a time of 4 hours, in air).

Based on those photographs data of dimensions of precipitates as seen by TEM measurements were summarized in Table 4 hereinafter.

So from Table 4 it becomes clear that annealing by temperature treatment makes precipitates or inclusions grow.

Distribution of precipitates was checked by a SEM (scanning electron microscope)-study. Samples were polished chemo-mechanically and the surface was carbon-coated or was cut by ultramicrotomy and then carbon coated.

The appearance of precipitates was found to be not exactly homogeneous, as there were always found "accumulation regions" (see Fig. 2 wherein in the left photograph, holes - presumably disruptions of precipitates in an ultramicrotomy cut - are shown; whereas in the right photograph precipitates -white in SEM contrast - are shown on a polished sample).

**Table 4**

| Storage phosphor | Not annealed | Annealed 180°C | Annealed 400°C |
|---|---|---|---|
| Average particle size | 175 nm | 210 nm | 280 nm |
| Deviation | 120 nm | 100 nm | 140 nm |
| Smallest particle | 33 nm | 77 nm | 155 nm |
| Biggest particle | 492 nm | 498 nm | 606 nm |
| Number of precipitates in | | | |
| - TEM images | 9 | 14 | 8 |
| - Polishing & ion-milled image | 2 | 14 | - |

Only a very tough temperature treatment, not suitable for application upon X-ray storage phosphors, provides a homogeneous precipitate distribution with average distances between precipitates of about 2 µm as shown in Fig. 3.

### Example 2

In following experiments CsBr:Eu needle phosphor plates were preconditioned in a clean room having a well-defined relative humidity, during 24 hours. The plates were annealed at a temperature in the range from about 150°C to about 170°C (exact figures in Table 5 hereinafter) during 2 or 4 hours and relative speeds were measured before and after this annealing step. Speed changes were calculated in relative speed increase as a difference between relative speed after annealing and relative speed before annealing. Data about the thickness of the needle-shaped layer and about the phosphor weight coverage have also been summarized in the Table 5.

From Table 5 hereinafter it is concluded that the highest relative speed increase within each series of materials of the same type (see differences in thickness) is attained at the highest relative humidity having a water content of more than 10 g/m³ (see 18.6 g/m³) for an almost constant temperature of about 170°C during a time period of 4 hours.

It further seems to be necessary to perform the annealing step at a relative humidity of at least 50%.

In the plate CB51810 amounts of Europium dopant were determined to be in the range of 325 p.p.m., whereas in the plate CB11705 amounts of Europium dopant were in the range of 130 p.p.m.. Higher amounts of Europium dopant present clearly provoke a relatively higher speed increase.

In following experiments CsBr:Eu needle phosphor plates were preconditioned during 24 hours, in a clean room having a well-defined relative humidity. The plates were annealed at a temperature in the range from about 150°C to about 170°C during 2 or 4 hours (exact figures in Table 6) and relative speeds were measured before and after this annealing step.

Relative humidities as measured in the conditioning were also included. Changes in speed were calculated. Data about the type of oven on one shelve of which each phosphor plate was positioned, have been represented in that Table 6, as well as particular circumstances (e.g. with or without ventilation).

From Table 6 hereinafter it is concluded again that the highest relative speed increase is attained at the highest relative humidity, having a water content of more than 10 g per cubic meter (see penultimate CB11705 plate in Table 6 - 18.8 g/m³ at annealing temperature) for an almost constant annealing temperature of about 170°C during a time period of 4 hours.

As can be derived from Table 7, the largest increase in relative speed after 4 hours of annealing at an annealing temperature of 90°C happens in annealing conditions wherein an absolute water content is more than 10 g/m³ (190.34 g/m³ and 243.2 g/m³ respectively).

In a further experiment, figures of which have been given in the Table 7 hereinafter, it has been shown that phosphor plates annealed in an atmosphere having high absolute amounts of water vapour (more than more than 10 g per m³ of dry air) in conditions of temperatures above 80°C (90°C for all samples in Table 7) show a stable quality and are not influenced by ageing phenomena.

**Table 5**

| Plate | Time & % RH condition | Conditioning temperature (°C) | Annealing temperature (°C) | Time (hours) | Relative speed increase | Coverage (mg/cm²) | Thickness (µm) | Water content (g/m³) at annealing temperature |
|---|---|---|---|---|---|---|---|---|
| CB51810 | 24h 40-60 | 23.2 | 153.4 | 2 | 285 | 221.9 | 570 | 8.7 |
| CB51810 | 24h 40-60 | 23.2 | 173.4 | 4 | 537.2 | 221.9 | 570 | 8.3 |
| CB71805 | 24h 40-60 | 23.2 | 153.4 | 2 | 92.7 | 74.47 | 190 | 8.7 |
| CB71805 | 24h 40-60 | 23.2 | 173.4 | 4 | 145.9 | 74.47 | 190 | 8.3 |
| CB51811 | 24h 64.2 | 36.3 | 173.6 | 4 | 599.9 | 255.49 | 658 | 18.6 |
| CB51811 | 24h 9.6 | 24.8 | 173.8 | 4 | 556.6 | 255.49 | 658 | 1.4 |
| CB71806 | 29h 64.2 | 36.3 | 173.6 | 4 | 156.7 | 77.35 | 196 | > 18.6 |
| CB71806 | 24h 9.6 | 24.8 | 173.8 | 4 | 135.3 | 77.35 | 196 | 1.4 |
| CB11705 | 24h 40-60 | 23.2 | 153.4 | 2 | 219.4 | 150.00 | 377 | 8.7 |
| CB11705 | 24h 40-60 | 23.2 | 173.4 | 4 | 304.6 | 150.00 | 377 | 8.3 |
| CB11705 | 24h 64.2 | 36.3 | 173.6 | 4 | 333.9 | 150.00 | 377 | > 18.6 |
| CB11705 | 24h 9.6 | 23.2 | 173.8 | 4 | 217.9 | 150.00 | 377 | 1.4 |

**Table 6**

| Plate | Time & % RH condit. | | Conditioning temperature (°C) | Temp. (°C) | Time (hours) | Sensitivity before annealing | Sensitivity after annealing | Oven type | Water content (g/m³) at annealing temperature |
|---|---|---|---|---|---|---|---|---|---|
| CB11705 | 24h | 52.6 | 23.2 | 157 | 2 | 57.1 | 276.5 | WTB-BINDER VD-117 | 7.5 |
| CB11705 | 24h | 47.6 | 26.1 | 170 | 4 | 50.4 | 330.2 | HERAEUS UT6060 | 7.8 |
| CB11705 | 24h | 50.4 | 25.7 | 170 | 4 | 57.8 | 362.4 | HERAEUS UT6060* | 8.1 |
| CB11705 | 24h | 45.9 | 25.7 | 170 | 4 | 52.1 | 327.8 | HERAEUS T6120 | 6.5 |
| CB11705 | 24h | 64.2 | 36.3 | 170 | 4 | 58.9 | 392.8 | HERAEUS UT6060 | 18.8 |
| CB11705 | 24h | 9.6 | 24.8 | 170 | 4 | 51.5 | 269.4 | HERAEUS UT6060 | 1.5 |

| | | | | | | | | | |
|---|---|---|---|---|---|---|---|---|---|
| ***** annealing with ventilation in oven | | | | | | | | | |

**Table 7**

| % RH | Annealing times (hours) | Absolute amount of water in g/kg | Absolute amount of water in g/m³ | SAL_rel increase* |
|---|---|---|---|---|
| 46 | 4 | 285.9 | 190.34 | 139 |
| | 8 | 285.9 | 190.34 | 166 |
| | 16 | 285.9 | 190.34 | 248 |
| 59 | 4 | 418.8 | 243.2 | 235 |
| | 8 | 418.8 | 243.2 | 252 |
| | 16 | 418.8 | 243.2 | 288 |
| 1.4 | 4 | 5.9 | 5.7 | 29 |

| | | | | |
|---|---|---|---|---|
| * speed changes were calculated in relative speed increase as differences between relative speed after annealing and relative speed before annealing. | | | | |

It has thus been shown in the present invention that an annealing step in the preparation of phosphors and phosphor plates provides an increase of the size of inclusions or precipitates.

The thermal annealing process should be carried out for a sufficient period of time and at a temperature high enough, but not too high in order not to detrimentally change the phosphor performance, e.g. by creating nano Europium containg dopant precipitates.

Because chemical reactivity and diffusion are material sensitive processes, the optimum annealing temperature-time conditions must be determined experimentally together with the composition of the atmosphere, with respect to pressure and composition (e.g. humidity and gas(es) present), and more particularly with respect to moisture content at the temperature at which the annealing process proceeds.

The number and the dimensions of cracks between the needles of the needle-, block- or prism-shaped phosphor crystals may be influenced by the annealing process, and more in particular by the applied temperature gradients, more particularly while cooling (e.g. when the cracks of a columnar photostimulable phosphor deposited on a support are further developed with a cooling shock-treatment, which may be followed by a further heating step) and may be favorable from a point of view of a lower strain or stress level of the densily packed phosphor columnar structure layer and from a point of view of lower scattering level of stimulated emission upon photostimulation of captured X-ray energy. As a result image definition - sharpness - may moreover favorably be influenced.

It may further be expected, as another favorable aspect, that an optimized annealing procedure avoids occurrence of "ageing effects" as annealing provides equilibrium conditioning - more particularly with respect to a more homogeneous dopant distribution within the crystal lattice structures present - and as a spontaneous need for further recrystallization is less stringent.

More particularly when said inclusion or precipitate has ferro-electric properties in a storage phosphor and when annealing conditions have been optimized, a contribution to an increase in speed or sensitivity is observed, without having a negative influence on sharpness.

A stabilising effect on the long term, whether or not to be considered as an "ageing" effect, clearly acts in favour of the phosphor plate characteristics.

Having described in detail preferred embodiments of the current invention, it will now be apparent to those skilled in the art that numerous modifications can be made therein without departing from the scope of the invention as defined in the appending claims.

## Claims

1. Method of preparing a stimulable phosphor layer comprising a phosphor composed of a host or matrix compound and a dopant or activator compound or element wherein a precipitate or inclusion having a size in the range from 10⁻³ µm up to 10 µm is present in said matrix compound after performing following steps:
- providing one or more crucibles containing precursor compounds for said host, said dopant and said precipitate, by increasing the temperature of said crucible(s) up to a temperature provoking evaporation of all of said precursor compounds as a vaporized latent phosphor cloud,
- depositing said vaporized latent phosphor cloud in form of a layer onto a temperature controlled substrate,
- followed by cooling said substrate, and further
- annealing said phosphor layer at a temperature in the range from 35°C up to 200°C, wherein said method is **characterised by** performing said annealing in an atmosphere having a water content of more than 10 g per m³ of dry air at the temperature at which annealing proceeds.

2. Method according to claim 1, wherein the temperature of the said substrate as presented in the annealing atmosphere when starting annealing, is lower than the dew point of water in said atmosphere.

3. Method according to claim 1 or 2, wherein annealing said phosphor layer proceeds at a temperature in the range from 80°C to 180°C.

4. Method according to claim 1 or 2, wherein annealing said phosphor layer proceeds at a temperature in the range from 90°C to 170°C.

5. Method according to any one of the claims 1 to 4, wherein a precipitate or inclusion has a size in the range from 10 nm to 1 µm.

6. Method according to any one of the claims 1 to 5, wherein at least said dopant or activator compound or element is present as an inclusion or precipitate in said matrix compound.

7. Method according to any one of the claims 1 to 6, wherein said inclusion or precipitate is a ferroelectric compound.

8. Method according to any one of the claims 1 to 7, wherein in said storage phosphor a total amount of activator compound ranges from 1 p.p.m. to 200,000 p.p.m..

9. Method according to any one of the claims 1 to 8, wherein said inclusion or precipitate is a compound or a mixture of compounds according to general formula (1)
M¹ M² X₃ (1),
wherein M¹ represents one of Li, Na, K, Rb and Cs as an alkali metal; wherein M² represents one of Mg, Ca, Sr and Ba as an earth alkaline metal; Eu or Sm as a lanthanide; Hg or Pb as a transition metal; wherein X stands for one of F, Cl, Br or I as a halide.

10. Method according to any one of the claims 1 to 9, wherein said inclusion or precipitate is selected from the group consisting of CsBaBr₃, CsSrBr₃, CsCaBr₃, CsPbCl₃, CsSrCl₃, CsSmCl₃, CsHgCl₃, and CsₓEu_{y}Br_{x+αy} wherein 2 ≤ α < 3.

11. Method according to any one of the claims 1 to 9, wherein said inclusion or precipitate is a compound or a mixture of compounds according to the general formula (2)
Ba₁₋ₓM¹ ₓ Ti_{1-y} M² _{y}O_{δ} (2)
wherein M¹ represents one of Li, Na, K, Rb and Cs as an alkali metal;
wherein M² represents one of Mg, Ca, Sr and Ba as an earth alkaline metal; Eu or Sm as a lanthanide; Hg or Pb as a transition metal; wherein X stands for one of F, Cl, Br or I as a halide and wherein 0 ≤ x ≤ 1, 0 ≤ y < 1 and δ = (3-x/2-y).

12. Method according to any one of the claims 1 to 11, wherein said storage phosphor is composed of a matrix compound selected from the group consisting of an alkali metal halide or combination of halides, an alkaline earth metal halide or combination of halides, an earth metal halide or combination of halides and a combination of at least two of said alkali metal, alkaline earth metal and earth metal halides or a combination of halides thereof.

13. Method according to any one of the claims 1 to 12, wherein said storage phosphor has, as a dopant or activator compound or element, at least one lanthanide ion or at least one lanthanide compound.

14. Method according to any one of the claims 1 to 13, wherein said storage phosphor is represented by the general formula (3)
M^{I}X.aM^{II} X'₂.bM X^{III}X"₃:zA (3)
in which M^{I} is at least one alkali metal element selected from the group consisting of Li, Na, K, Rb and Cs; M^{II} is at least one alkaline earth metal element or divalent metal element selected from the group consisting of Be, Mg, Ca, Sr, Ba, Ni, Cu, Zn and Cd; M^{III} is at least one rare earth element or trivalent metal element selected from the group consisting of Sc, Y, La, Ce, Pr, Nd, Pm, Sm, Eu, Gd, Tb, Dy, Ho, Er, Tm, Yb, Lu, Al, Ga and In; each of each of X, X' and X" independently is at least one halogen selected from the group consisting of F, Cl, Br and I; A is at least one rare earth element or metal element selected from the group consisting of Y, Ce, Pr, Nd, Sm, Eu, Gd, Tb, Dy, Ho, Er, Tm, Yb, Lu, Mg, Cu, and Bi; and a, b and z are numbers satisfying the conditions of 0 ≤ a < 0.5, 0 ≤ b < 0.5 and 0 < z ≤ 1.0, respectively.

15. Method according to any one of the claims 1 to 14, wherein said stimulable phosphor is a europium activated cesium bromide phosphor.

16. Method according to claim 15, wherein in said stimulable phosphor Eu is present as a dopant or activator compound or element in an amount of at least 200 p.p.m..

17. Method according to any one of the claims 1 to 14, wherein said stimulable phosphor is a europium activated barium fluorobromide phosphor.

18. Method according to any one of the claims 1 to 17, wherein after annealing a further cooling step is performed at a rate of less than 0.5°C per minute

19. Method according to any one of the claims 1 to 18, wherein said support is selected from the group consisting of metals, glass, polyester, polycarbonate, carbon reinforced resin plates or fibers, ceramic composites and amorphous carbon.

20. Method according to any one of the claims 1 to 19, wherein depositing said vaporized latent phosphor cloud in form of a layer proceeds in a batch process.

21. Method according to any one of the claims 1 to 19, wherein depositing said vaporized latent phosphor cloud in form of a layer proceeds in a continuous process.

22. Method according to any one of the claims 1 to 21, wherein depositing said vaporized latent phosphor cloud in form of a layer proceeds by a method selected from the group consisting of physical vapour deposition, chemical vapor deposition or an atomisation technique.

## Patentansprüche

1. Verfahren zur Herstellung einer anregbaren Leuchtstoffschicht mit einem Leuchtstoff bestehend aus einer Wirts- oder Matrix-Verbindung und einer Dotierstoff- oder Aktivator-Verbindung bzw. einem Dotierstoff- oder Aktivator-Element, wobei nach der Durchführung der nachstehenden Schritte eine Ausscheidung oder ein Einschluss mit einer Größe im Bereich von 10⁻³ µm bis 10 µm in der Matrix-Verbindung vorliegt:
- Bereitstellung eines Tiegels oder mehrerer Tiegel, der bzw. die Vorläuferverbindungen für den Wirt, den Dotierstoff und die Ausscheidung enthält bzw. enthalten, indem die Temperatur des Tiegels bzw. der Tiegel auf eine Temperatur, die die Verdampfung aller Vorläuferverbindungen als eine verdampfte latente Leuchtstoffwolke bewirkt, erhöht wird,
- Abscheidung der verdampften latenten Leuchtstoffwolke in Form einer Schicht auf ein temperaturgeregeltes Substrat,
- anschließende Abkühlung des Substrats, und weiterhin
- Temperung der Leuchtstoffschicht bei einer Temperatur im Bereich von 35°C bis 200°C,
wobei das Verfahren **dadurch gekennzeichnet** wird, dass die Temperung unter einer Atmosphäre mit einem Wassergehalt größer als 10 g pro m³ an trockener Luft bei der Temperatur, bei der die Temperung erfolgt, vorgenommen wird.

2. Verfahren nach Anspruch 1, **dadurch gekennzeichnet, dass** die Temperatur des Substrats, wie es beim Anfang der Temperung in die Temperungsatmosphäre eingebracht wird, niedriger ist als der Taupunkt des Wassers in der Atmosphäre.

3. Verfahren nach Anspruch 1 oder 2, **dadurch gekennzeichnet, dass** die Temperung der Leuchtstoffschicht bei einer Temperatur im Bereich von 80°C bis 180°C erfolgt.

4. Verfahren nach Anspruch 1 oder 2, **dadurch gekennzeichnet, dass** die Temperung der Leuchtstoffschicht bei einer Temperatur im Bereich von 90°C bis 170°C erfolgt.

5. Verfahren nach einem der Ansprüche 1 bis 4, **dadurch gekennzeichnet, dass** eine Ausscheidung oder ein Einschluss eine Größe im Bereich von 10 nm bis 1 µm aufweist.

6. Verfahren nach einem der Ansprüche 1 bis 5, **dadurch gekennzeichnet, dass** wenigstens die Dotierstoff- oder Aktivator-Verbindung bzw. das Dotierstoff- oder Aktivator-Element als ein Einschluss oder eine Ausscheidung in der Matrix-Verbindung enthalten ist.

7. Verfahren nach einem der Ansprüche 1 bis 6, **dadurch gekennzeichnet, dass** es sich beim Einschluss oder bei der Ausscheidung um eine ferroelektrische Verbindung handelt.

8. Verfahren nach einem der Ansprüche 1 bis 7, **dadurch gekennzeichnet, dass** eine Gesamtmenge an Aktivator-Verbindung in dem Speicherleuchtstoff zwischen 1 p.p.m. und 200 000 p.p.m. variiert.

9. Verfahren nach einem der Ansprüche 1 bis 8, **dadurch gekennzeichnet, dass** es sich beim Einschluss oder bei der Ausscheidung um eine Verbindung oder ein Gemisch aus Verbindungen entsprechend der allgemeinen Formel (1) handelt
M¹M²X₃ (1) ,
in der bedeuten M¹ ein Element aus der Reihe Li, Na, K, Rb und Cs als Alkalimetall; M² ein Element aus der Reihe Mg, Ca, Sr und Ba als Erdalkalimetall; Eu oder Sm als Lanthanid; Hg oder Pb als Übergangsmetall; X ein Element aus der Reihe F, Cl, Br oder I als Halogenid.

10. Verfahren nach einem der Ansprüche 1 bis 9, **dadurch gekennzeichnet, dass** der Einschluss oder die Ausscheidung aus der Reihe CsBaBr₃, CsSrBr₃ CsCaBr₃ CsPbCl₃ CsSrCl₃, CsSmCl₃ CsHgCl₃ und CsₓEuyBr_{x+αy} gewählt wird, wobei 2 ≤ α < 3.

11. Verfahren nach einem der Ansprüche 1 bis 9, **dadurch gekennzeichnet, dass** es sich beim Einschluss oder bei der Ausscheidung um eine Verbindung oder ein Gemisch aus Verbindungen entsprechend der allgemeinen Formel (2) handelt
Ba₁₋ₓM¹ ₓTi_{1-y}M² _{y}O_{δ} (2)
in der bedeuten
M¹ ein Element aus der Reihe Li, Na, K, Rb und Cs als Alkalimetall;
M² ein Element aus der Reihe Mg, Ca, Sr und Ba als Erdalkalimetall; Eu oder Sm als Lanthanid; Hg oder Pb als Übergangsmetall; X ein Element aus der Reihe F, Cl, Br oder I als Halogenid und in der 0 ≤ x ≤ 1, 0 ≤ y < 1 und δ = (3-x/2-y).

12. Verfahren nach einem der Ansprüche 1 bis 11, **dadurch gekennzeichnet, dass** der Speicherleuchtstoff aus einer Matrix-Verbindung aus der Reihe bestehend aus einem Alkalimetallhalogenid oder einer Kombination solcher Halogenide, einem Erdalkalimetallhalogenid oder einer Kombination solcher Halogenide, einem Erdmetallhalogenid oder einer Kombination solcher Halogenide und einer Kombination von wenigstens zwei solcher Alkalimetall-, Erdalkalimetall- und Erdmetallhalogenide oder einer Kombination deren Halogenide besteht.

13. Verfahren nach einem der Ansprüche 1 bis 12, **dadurch gekennzeichnet, dass** der Speicherleuchtstoff als Dotierstoff- oder Aktivator-Verbindung bzw. Dotierstoff- oder Aktivator-Element wenigstens ein Lanthanid-Ion oder wenigstens eine Lanthanid-Verbindung aufweist.

14. Verfahren nach einem der Ansprüche 1 bis 13, **dadurch gekennzeichnet, dass** der Speicherleuchtstoff der allgemeinen Formel (3) entspricht
M^{I}X.aM^{II}X'_{2.}bM^{III}X"₃:zA (3)
in der bedeuten
M^{I} wenigstens ein Alkalimetallelement aus der Reihe Li, Na, K, Rb und Cs; M^{II} wenigstens ein Erdalkalimetallelement oder zweiwertiges Metallelement aus der Reihe Be, Mg, Ca, Sr, Ba, Ni, Cu, Zn und Cd; M^{III} wenigstens ein Seltenerdelement oder dreiwertiges Metallelement aus der Reihe Sc, Y, La, Ce, Pr, Nd, Pm, Sm, Eu, Gd, Tb, Dy, Ho, Er, Tm, Yb, Lu, Al, Ga und In; X, X' und X" unabhängig voneinander je wenigstens ein Halogen aus der Reihe F, Cl, Br und I; A wenigstens ein Seltenerdelement oder Metallelement aus der Reihe Y, Ce, Pr, Nd, Sm, Eu, Gd, Tb, Dy, Ho, Er, Tm, Yb, Lu, Mg, Cu, und Bi; und in der a, b und z Zahlen sind, die den folgenden Gleichungen genügen : 0 ≤ a < 0,5 bzw. 0 ≤ b < 0,5 und 0 < z ≤ 1,0.

15. Verfahren nach einem der Ansprüche 1 bis 14, **dadurch gekennzeichnet, dass** es sich beim anregbaren Leuchtstoff um einen mit Europium aktivierten Cäsiumbromid-Leuchtstoff handelt.

16. Verfahren nach Anspruch 15, **dadurch gekennzeichnet, dass** Eu als Dotierstoff- oder Aktivator-Verbindung bzw. Dotierstoff- oder Aktivator-Element in einer Menge von wenigstens 200 p.p.m. im anregbaren Leuchtstoff enthalten ist.

17. Verfahren nach einem der Ansprüche 1 bis 14, **dadurch gekennzeichnet, dass** es sich beim anregbaren Leuchtstoff um einen mit Europium aktivierten Bariumfluorobromid-Leuchtstoff handelt.

18. Verfahren nach einem der Ansprüche 1 bis 17, **dadurch gekennzeichnet, dass** nach der Temperung ein weiterer Abkühlschritt mit einer Geschwindigkeit kleiner als 0,5°C pro Minute durchgeführt wird.

19. Verfahren nach einem der Ansprüche 1 bis 18, **dadurch gekennzeichnet, dass** der Träger aus der Reihe bestehend aus Metallen, Glas, Polyestern, Polycarbonat, Platten oder Fasern aus kohlenstoffverstärktem Harz, keramischen Verbundwerkstoffen und amorphem Kohlenstoff ausgewählt wird.

20. Verfahren nach einem der Ansprüche 1 bis 19, **dadurch gekennzeichnet, dass** die Abscheidung der verdampften latenten Leuchtstoffwolke in Form einer Schicht nach einem Chargenprozess erfolgt.

21. Verfahren nach einem der Ansprüche 1 bis 19, **dadurch gekennzeichnet, dass** die Abscheidung der verdampften latenten Leuchtstoffwolke in Form einer Schicht nach einem kontinuierlichen Verfahren erfolgt.

22. Verfahren nach einem der Ansprüche 1 bis 21, **dadurch gekennzeichnet, dass** die Abscheidung der verdampften latenten Leuchtstoffwolke in Form einer Schicht nach einem Verfahren aus der Reihe bestehend aus einer physikalischen Gasphasenabscheidung, einer chemischen Gasphasenabscheidung oder einem Verdüsungsverfahren erfolgt.

## Revendications

1. Procédé de préparation pour une couche de luminophore stimulable comprenant un luminophore constitué d'un composé hôte ou composé matriciel et d'un composé ou d'un élément dopant ou activant,
dans lequel un précipité ou une inclusion avec une taille dans la plage de 10⁻³ µm à 10 µm est présent(e) dans ledit composé matriciel après la réalisation des étapes suivantes consistant à :
- procurer un ou plusieurs creusets contenant des composés précurseurs pour ledit hôte, ledit agent de dopage et ledit précipité en augmentant la température dudit creuset ou desdits creusets jusqu'à une température provoquant l'évaporation de tous les composés précurseurs précités sous forme d'un nuage de luminophore latent vaporisé,
- déposer ledit nuage de luminophore latent vaporisé sous forme d'une couche sur un substrat à température contrôlée,
- refroidir ensuite ledit substrat, et en outre
- recuire ladite couche de luminophore à une température dans la plage de 35°C à 200°C,
ledit procédé étant **caractérisé en ce que** ledit recuit est réalisé sous une atmosphère possédant une teneur en eau supérieure à 10 g par m³ d'air sec à la température à laquelle le recuit est effectué.

2. Procédé selon la revendication 1, **caractérisé en ce que** la température dudit substrat tel qu'amené dans l'atmosphère de recuit, lors du démarrage du recuit, est inférieure au point de rosée de l'eau dans cette atmosphère.

3. Procédé selon la revendication 1 ou 2, **caractérisé en ce que** le recuit de ladite couche de luminophore est effectué à une température dans la plage de 80°C à 180°C.

4. Procédé selon la revendication 1 ou 2, **caractérisé en ce que** le recuit de ladite couche de luminophore est effectué à une température dans la plage de 90°C à 170°C.

5. Procédé selon l'une quelconque des revendications 1 à 4, **caractérisé en ce qu'**un précipité ou une inclusion possède une taille dans la plage de 10 nm à 1 µm.

6. Procédé selon l'une quelconque des revendications 1 à 5, **caractérisé en ce qu'**au moins ledit composé ou ledit élément dopant ou activant est présent sous forme d'une inclusion ou d'un précipité dans ledit composé matriciel.

7. Procédé selon l'une quelconque des revendications 1 à 6, **caractérisé en ce que** ladite inclusion ou ledit précipité est un composé ferroélectrique.

8. Procédé selon l'une quelconque des revendications 1 à 7, **caractérisé en ce qu'**une quantité totale de composé activant dans ledit luminophore d'emmagasinage est comprise entre 1 p.p.m. et 200 000 p.p.m..

9. Procédé selon l'une quelconque des revendications 1 à 8, **caractérisé en ce que** ladite inclusion ou ledit précipité est un composé ou un mélange de composés répondant à la formule générale (1)
M¹M²X₃ (1)
dans laquelle M¹ représente un des éléments Li, Na, K, Rb et Cs en tant que métal alcalin; M² représente un des éléments Mg, Ca, Sr et Ba en tant que métal alcalino-terreux; Eu ou Sm en tant que lanthanide; Hg ou Pb en tant que métal de transition; et dans laquelle X représente un des halogénures F, C1, Br ou I.

10. Procédé selon l'une quelconque des revendications 1 à 9, **caractérisé en ce que** ladite inclusion ou ledit précipité est choisi(e) parmi CsBaBr₃, CsSrBr₃, CsCaBr₃, CsPbCl₃, CsSrCl₃, CsSmCl₃, CsHgCl₃, et CSₓEU_{y}Br_{x+αy} dans lequel 2 ≤ α < 3.

11. Procédé selon l'une quelconque des revendications 1 à 9, **caractérisé en ce que** ladite inclusion ou ledit précipité est un composé ou un mélange de composés répondant à la formule générale (2)
Ba₁₋ₓ M¹ ₓ Ti_{1-y}M² _{y}O_{δ} (2)
dans laquelle M¹ représente un des éléments Li, Na, K, Rb et Cs en tant que métal alcalin;
dans laquelle M² représente un des éléments Mg, Ca, Sr et Ba en tant que métal alcalino-terreux; Eu ou Sm en tant que lanthanide; Hg ou Pb en tant que métal de transition; dans laquelle X représente un des halogénures F, Cl, Br ou I et dans laquelle 0 ≤ x ≤1, 0 ≤ y < 1 et δ = (3-x/2-y).

12. Procédé selon l'une quelconque des revendications 1 à 11, **caractérisé en ce que** ledit luminophore d'emmagasinage est constitué par un composé matriciel choisi parmi un halogénure ou une combinaison d'halogénures des métaux alcalins, un halogénure ou une combinaison d'halogénures des métaux alcalino-terreux, un halogénure ou une combinaison d'halogénures des métaux terreux et une combinaison d'au moins deux de ces halogénures des métaux alcalins, des métaux alcalino-terreux et des métaux terreux ou une combinaison d'halogénures de ceux-ci.

13. Procédé selon l'une quelconque des revendications 1 à 12, **caractérisé en ce que** ledit luminophore d'emmagasinage possède au moins un ion lanthanide ou au moins un composé lanthanide faisant office de composé ou élément dopant ou activant.

14. Procédé selon l'une quelconque des revendications 1 à 13, **caractérisé en ce que** ledit luminophore d'emmagasinage répond à la formule générale (3)
M^{I}X.aM^{II}X'₂.bM^{III}X"₃:zA (3)
dans laquelle M^{I} est au moins un élément des métaux alcalins choisi parmi Li, Na, K, Rb et Cs; M^{II} est au moins un élément des métaux alcalino-terreux ou un élément des métaux divalents choisi parmi Be, Mg, Ca, Sr, Ba, Ni, Cu, Zn et Cd; M^{III} est au moins un élément des terres rares ou un élément des métaux trivalents choisi parmi Sc, Y, La, Ce, Pr, Nd, Pm, Sm, Eu, Gd, Tb, Dy, Ho, Er, Tm, Yb, Lu, Al, Ga et In; X, X' et X" indépendamment l'un de l'autre représentent chacun au moins un atome d'halogène choisi parmi F, Cl, Br et I; A est au moins un élément des terres rares ou élément des métaux choisi parmi Y, Ce, Pr, Nd, Sm, Eu, Gd, Tb, Dy, Ho, Er, Tm, Yb, Lu, Mg, Cu, et Bi; et a, b et z sont des nombres tels que respectivement 0 ≤ a < 0,5, 0 ≤ b < 0,5 et 0 < z ≤ 1.0.

15. Procédé selon l'une quelconque des revendications 1 à 14, **caractérisé en ce que** ledit luminophore stimulable est un luminophore de bromure de césium activé à l'europium.

16. Procédé selon la revendication 15, **caractérisé en ce que** l'Eu est contenu dans ledit luminophore stimulable en tant que composé ou élément dopant ou activant dans une quantité d'au moins 200 p.p.m..

17. Procédé selon l'une quelconque des revendications 1 à 14, **caractérisé en ce que** ledit luminophore stimulable est un luminophore de fluorobromure de baryum activé à l'europium.

18. Procédé selon l'une quelconque des revendications 1 à 17, **caractérisé en ce qu'**après le recuit une étape additionnelle consistant à refroidir est effectuée à une vitesse inférieure à 0,5°C par minute.

19. Procédé selon l'une quelconque des revendications 1 à 18, **caractérisé en ce que** ledit support est choisi parmi les métaux, le verre, le polyester, le polycarbonate, les plaques ou fibres en résine renforcée par carbone, les matériaux complexes en céramique et le carbone amorphe.

20. Procédé selon l'une quelconque des revendications 1 à 19, **caractérisé en ce que** la déposition dudit nuage de luminophore latent vaporisé sous forme d'une couche est effectuée selon un procédé par lots.

21. Procédé selon l'une quelconque des revendications 1 à 19, **caractérisé en ce que** la déposition dudit nuage de luminophore latent vaporisé sous forme d'une couche est effectuée selon un procédé continu.

22. Procédé selon l'une quelconque des revendications 1 à 21, **caractérisé en ce que** la déposition dudit nuage de luminophore latent vaporisé sous forme d'une couche est effectuée au moyen d'un procédé choisi parmi la déposition en phase gazeuse par procédé physique, la déposition en phase gazeuse par procédé chimique ou une technique d'atomisation.
